# EUROPEAN PATENT SPECIFICATION

(11) **EP 1 751 450 B1**
(45) Date of publication and mention of the grant of the patent: **06.05.2009**
(21) Application number: 04745145.5
(22) Date of filing: 14.05.2004
(51) Int. Cl.: F16H 55/36, F16D 3/52

(54) **PULLEY ASSEMBLY**
RIEMENSCHEIBENANORDNUNG
ENSEMBLE POULIE

(43) Date of publication of application: 14.02.2007
(73) Proprietor: Dayco Europe S.r.l. con Unico Socio, Frazione Chieti Scalo 66100 Chieti (IT)
(72) Inventor: CARICCIA, Gianluca, I-09170 Oristano (IT); ROLANDO, Adriano, I-10086 Rivarolo (IT)
(74) Representative: Jorio, Paolo
(86) International application number: PCT/IT2004/000274
(87) International publication number: WO 2005/111468

(56) References cited:
- WO-A-98/50709
- DE-A- 4 407 157
- DE-A- 10 103 082
- US-A- 5 352 156
- US-A- 5 598 913
- US-A1- 2002 104 730

## Description

### TECHNICAL FIELD

The present invention relates to a pulley assembly, particularly for a drive belt connecting a number of accessory members to a drive shaft of an internal combustion engine, according to the preamble of claim 1 and as it is disclosed in WO 98/50709 A.

### BACKGROUND ART

Pulley assemblies are known comprising a hub connected rigidly to a drive member, e.g. a drive shaft of an internal combustion engine; a pulley coaxial with the hub and cooperating with a drive belt; and a first elastic connecting member interposed between the hub and the pulley, and which acts as an elastic joint to filter transmission of torsional oscillation between the hub and the pulley.

Pulley assemblies of the type briefly described above are used in vehicles to belt-drive auxiliary engine components, such as the alternator, cooling water or hydraulic steering system pump, and air conditioning system compressor.

Known assemblies of the above type normally also comprise an integrated torsion damper, which is defined by an annular inertia member, or inertia ring, coaxial with the hub, and by a second elastic connecting member interposed between the hub and the inertia ring. The moment of inertia of the inertia ring and the elastic characteristic of the second elastic connecting member are calibrated to create a "mass-spring" system by which to correct the natural dynamic behaviour of the drive shaft, and in particular to attenuate the oscillation peak at the first torsional vibration frequency, thus permitting operation without reaching critical resonance conditions.

The elastic joint between the hub and the pulley is necessary to filter transmission of torsional oscillation of the drive shaft to the accessories, and to absorb instantaneous differences in rotation speed in particular operating conditions, such as start-up and sharp deceleration of the engine, in which, given the considerable inertia of the driven members, particularly the alternator, the pulley tends to rotate faster than the hub.

In a first known embodiment, the elastic joint is defined by a ring made of elastomeric material, interposed radially or axially between the hub and the pulley, and fixed, e.g. cured, to both. To effectively perform the "filtering" function referred to above, the elastomeric material must be of limited stiffness. As a result, the component is critical both mechanically - in that the high degree of deformability of the material conflicts with the high mechanical strength necessary to transmit the required torques - and, above all, thermally. In this respect, in fact, high-temperature resistance characteristics of the material are impossible to achieve.

In an attempt to solve the above problems, solutions have been proposed in which the elastic joint is defined by one or more springs in lieu of the ring of elastomeric material. '

More specifically, in a first known solution in DE-A-4 407 157 - which, to the Applicant's knowledge, has not yet been put into practical use - the elastic joint is defined by a coil spring wound about the hub and having one end connected rigidly to the pulley, and the opposite end fitted in sliding manger to the hub with the interposition of a friction pad. Performance therefore differs depending on the torque direction. When the hub tends to drive the pulley, i.e. in normal drive operating conditions, the spring tends to grip the hub and to transmit motion with increasing stiffness; whereas, when the pulley tends to rotate faster than the hub, the spring tends to release the hub.

One drawback of this solution is its considerable axial size; and another is the high noise level caused by the turns of the spring contacting the hub.

US-A-2002/0104730 discloses a pulley assembly in which a coil spring provides a one-way coupling between the hub and the pulley.

EP-A-1 279 807 describes a pulley assembly in which the hub is fitted to the pulley by a pair of spiral springs connected to work in compression when the hub drives the pulley. The stiffness of the elastic joint therefore increases gradually with torque transmission, eventually reaching substantially rigid performance at high torque transmission values; whereas, when the pulley tends to rotate faster than the hub, the joint releases the pulley from the hub.

Though partly solving the aforementioned drawbacks, this solution is not without problems of its own.

Firstly, since, in certain operating conditions, particularly start-up, severe torsional oscillation occurs with relative rotation between the hub and pulley in both directions, substantially rigid performance in one of the two torque transmission directions subjects the belt and the drive as a whole to anomalous stress, thus possibly resulting in slip of the belt and noise.

Secondly, the absence of release in the normal torque transmission direction subjects the spring to severe compressive stress which may result in fatigue failure during the working life of the component.

### DISCLOSURE OF INVENTION

It is an object of the present invention to provide a pulley assembly designed to eliminate the aforementioned drawbacks typically associated with known assemblies.

According to the present invention, there is provided a pulley assembly for a belt drive, particularly for an internal combustion engine, comprising a hub connected to a rotary member and rotating with it about a respective axis; a pulley coaxial with the hub and cooperating with a belt; and an elastic joint interposed between said hub and said pulley, and comprising elastic means for connecting said pulley rotationally to said hub, and limited-torque-transmission friction means for releasing said pulley from said hub above a first maximum transmittable torque value in a first relative rotation direction between said hub and said pulley; said elastic means comprising a spiral spring wound about said axis and generating an elastic load to transmit torque between said hub and said pulley; and said friction means comprising a first friction coupling between a first end portion of said spring and said pulley, and which defines said first maximum transmittable torque value; characterized in that said spring has a second end portion connected to said hub by a second friction coupling, wherein said second friction coupling defines a second maximum transmittable torque value in second relative rotation direction between said hub and said pulley; said first and said second friction coupling permitting slip of the respective said end portions of said spring with respect to said pulley and to said hub above the respective maximum transmittable torque values in the respective relative rotation directions.

### BRIEF DESCRIPTION OF THE DRAWINGS

A preferred, non-limiting embodiment of the present invention will be described by way of example with reference to the accompanying drawings, in which:
Figure 1 shows an axial section of a first embodiment of a pulley assembly in accordance with the present invention;
Figure 2 shows a cross section along line II-II in Figure 1;
Figure 3 shows a graph of the torque transmitted as a function of the angle of relative rotation between a hub and a pulley of the pulley assembly according to the invention.

### BEST MODE FOR CARRYING OUT THE INVENTION

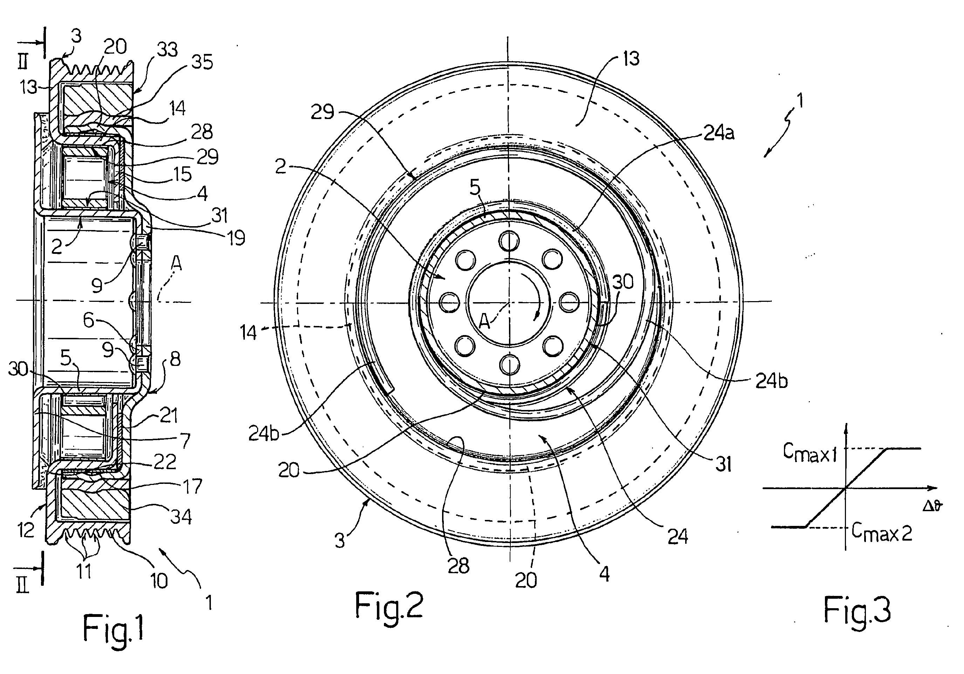

Number 1 in Figure 1 indicates as a whole a pulley assembly in accordance with the present invention.

Pulley assembly 1 substantially comprises a hub 2, of axis A, fixed rigidly to a drive shaft (not shown) of an internal combustion engine; a pulley 3 coaxial with the hub; and an elastic joint 4 interposed between hub 2 and pulley 3.

Hub 2 is conveniently made of sheet metal, and comprises, integrally, a cylindrical wall 5; a radial inner flange 6 extending inwards from an axial end of cylindrical wall 5 facing the engine in use; and a radial outer flange 7 extending outwards from an opposite axial end of cylindrical wall 5. Hub 2 also comprises an annular flange 8 fixed rigidly, e.g. by rivets 9 or welded, to inner flange 6, and fitted with a torsion damper 33, as described in detail later on.

Flange 8 is substantially bell-shaped, and is defined by a disk-shaped portion 19 fixed rigidly to inner flange 6 of hub 2, and by an annular wall 20 externally coaxial with cylindrical wall 5 and extending axially towards outer flange 7 from an outer periphery of the disk-shaped portion.

Pulley 3, which is conveniently a multiple-groove or poly-V type, is conveniently made of sheet metal by successive stamping and rolling operations, and comprises, integrally, a substantially cylindrical rim 10, on an outer surface of which are defined a number of grooves 11; and a disk 12 extending integrally inwards from an axial end of rim 10 facing flange 7 of the hub.

More specifically, disk 12 comprises a flat outer annular wall 13 integral with rim 10; an intermediate cylindrical wall 14 externally coaxial with cylindrical wall 5 of hub 2, and internally coaxial with annular wall 20 of flange 8; and a flat annular wall 15 extending radially inwards and facing disk-shaped portion 19 of flange 8.

Pulley 3 is supported axially and radially with respect to hub 2.

More specifically, the radial support is defined by a bush 17 conveniently made of antifriction material and interposed radially between wall 14 of pulley 3 and annular wall 20 of flange 8.

The axial support is defined by a flat ring 21 interposed between wall 15 of pulley 3 and disk-shaped portion 19 of hub 2, and by an annular member 22 interposed between flange 7 of hub 2 and wall 13 of pulley 3.

Ring 21 is conveniently made of antifriction plastic material; and member 22 may be made of plastic or elastomeric material, and may provide for damping relative oscillation between hub 2 and pulley 3, as well as for sealing against external agents.

Elastic joint 4 interposed between, hub 2 and pulley 3 comprises a rectangular-section spiral spring 24 wound about axis A and having an inner end portion 24a connected frictionally to hub 2, and an outer end portion 24b connected frictionally to pulley 3.

The coil direction of spring 24 is conveniently such that spring 24 is subjected to pull in normal operating conditions of pulley assembly 1, i.e. when hub 2 tends to drive pulley 3. Assuring the hub rotates clockwise (Figure 2), this means the radius of the coil of spring 24 increases anticlockwise, i.e. the radius of spring 24 increases proceeding circumferentially anticlockwise along the spring.

More specifically, wall 14 of pulley 3 conveniently has an inner friction coating 28, with which outer end portion 24b of spring 24 cooperates interferentially to define a first friction coupling 29; and, similarly, wall 5 of the hub conveniently has an outer friction coating 30, to which inner end portion 24a of the spiral spring is fitted interferentially to define a second friction coupling 31.

The friction properties of coating 28 and the radial pressure exerted on it by spring 24 as a consequence of the interference fit are selected to define a first maximum torque value Cmax1 transmittable by elastic joint 4 in the "normal" relative rotation direction, i.e. when hub 2 tends to rotate faster than pulley 3 (i.e. when, in use, the drive shaft drives the auxiliary members). Above the maximum torque value, there is a loss of grip and, therefore, angular decoupling of hub 2 and pulley 3.

Similarly, the friction properties of coating 30 and the radial pressure exerted on it by spring 24 as a consequence of the interference fit are selected to define a second maximum torque value -Cmax2 (in absolute value) transmittable by elastic joint 4 in the opposite relative rotation direction, i.e. when pulley 3 tends to drive hub 2 (the "-" sign is conventionally used to indicate a drive torque, as opposed to a resisting torque, acting on hub 2). Above the maximum torque value (in absolute value), there is a loss of grip and, therefore, angular decoupling of hub 2 and pulley 3.

This may occur, in use, in the presence of severe torsional oscillation during start-up, or when, as a result of sharp deceleration of the engine, the inertia of the accessories, particularly the alternator, tends to drive the engine.

It should be pointed out that the above maximum torque values Cmax1 and -Cmax2 are defined in relation to the respective relative rotation directions between hub 2 and pulley 3 by the connection conditions of spring 23, which produces a different performance of each of the two friction couplings, depending on the relative rotation direction.

That is, for positive relative rotation angle values (hub 2 drives pulley 3), the spring is subjected to combined pulling/bending stress which tends to contract the turns of the spiral radially, so that the arc of contact between inner end portion 24a and friction coating 30 tends to increase, and friction coupling 31 therefore has no tendency to slip. Conversely, as the transmitted torque value increases, the arc of contact between outer end portion 24b and friction coating 28 tends to decrease, thus resulting in slip of friction coupling 29 at maximum transmittable torque value Cmax1.

For negative relative rotation angle values (hub 2 is driven by pulley 3), spring 24 is subjected to combined compressive/bending stress which tends to expand the turns of the coil radially, so that the arc of contact between outer end portion 24b and friction coating 28 tends to increase, and friction coupling 29 therefore has no tendency to slip. Conversely, as the transmitted torque increases (in absolute value), the arc of contact between inner end portion 24a and friction coating 30 tends to decrease, thus resulting in slip of friction coupling 31 at maximum transmittable torque value -Cmax2.

Integrated torsion damper 33, which is known, is defined by an inertia ring 34 housed in the gap between annular wall 20 of flange 8 and rim 10 of pulley 3, and by a coupling ring 35 made of elastomeric material and interposed, e.g. force-fitted, radially between annular wall 20 and inertia ring 34 to connect them torsionally and elastically.

Pulley assembly 1 operates as follows.

Torsion damper 33 operates in the normal way, and is therefore not described in detail.

Torque is transmitted between hub 2 and pulley 3 by elastic joint 4, and therefore substantially by spring 24. By appropriately establishing the rigidity (torsional rigidity) of spring 24, elastic joint 4 provides for "filtering" torsional oscillation between hub 2 and pulley 3. Performance of elastic joint 4 is symmetrical in both relative rotation directions, and is linear within the maximum transmittable torque values in both relative rotation directions. That is, transmitted torque is proportional to the relative rotation angle between hub 2 and pulley 3.

In the event of severe torsional oscillation of hub 2 with respect to pulley 3, as when starting up, or of sharp acceleration or deceleration of the engine on account of the high degree of inertia of the accessory members, the instantaneous torque acting on joint 4 may reach maximum transmittable torque value Cmax1 or - Cmax2, thus resulting in decoupling of hub 2 and pulley 3.

As explained above, decoupling is produced by slippage of first friction coupling 29 for positive relative rotation angle values, and by slippage of second friction coupling 31 for negative relative rotation angle values.

Decoupling therefore occurs in both relative rotation directions between hub 2 and pulley 3, thus preventing anomalous stress on spring 24 and the drive members in general in any operating condition.

Friction couplings 29, 31 may be designed so that values Cmax1 and -Cmax2 are equal in absolute value, and the performance of joint 4 therefore perfectly symmetrical in both relative rotation directions.

Elastic joint 4 therefore has the characteristic shown in the Figure 3 graph, in which the x axis shows the hub-pulley relative rotation angles Δθ, and the y axis the torque transmitted. For torque values below maximum transmittable torque value Cmax1, -Cmax2 in absolute value, the characteristic is a line through the origin, and the slope of which is defined by the rigidity (torsional rigidity) of spring 24. For relative rotation angle values greater, in absolute value, than those corresponding to maximum transmittable torque values Cmax1, -Cmax2, the characteristic is defined by two half-lines parallel to the x axis, i.e. of constant torque equal to the maximum transmittable torque value in each of the two directions (Cmax1 and -Cmax2 respectively).

The advantages of pulley assembly 1 according to the present invention will be clear from the foregoing description.

In particular, by virtue of elastic joint 4 releasing pulley 3 from the hub in both relative rotation directions upon reaching a predetermined maximum torque value Cmax1, -Cmax2, there is no risk of subjecting spring 24 to anomalous stress, particularly at start-up, or of transmitting excessive stress to the belt, or of causing slippage of the belt, thus resulting in noise. For lower torques, in absolute value, the joint performs perfectly elastically, with a linear characteristic in both relative rotation directions.

Assembly 1 is extremely cheap to produce, by comprising a small number of component parts and being easy to assemble. In fact, the elastic joint and decoupling functions are performed substantially by spring 24 alone, which calls for no particular machining, and the ends of which are simply interference-fitted to hub 2 and pulley 3.

Clearly, changes may be made to pulley assembly 1 without, however, departing from the protective scope defined by the accompanying Claims.

In particular, friction coatings 28, 30 may be applied to respective ends 24b, 24a of spring 24, as opposed to pulley 3 and hub 2, or may even be eliminated if the friction properties and wear resistance are acceptable.

Spring 24 may be at least partly other than strictly spiral in shape. For example, ends 24a, 24b may be other than spiral, e.g. arc-shaped, at least along the respective friction coupling portions.

If necessary to prevent anomalous axial slip of spring 24, two rings of antifriction material may be provided at opposite axial ends of the spring.

Pulley assembly 1 may be used for applications, automotive or not, other than the one described, and in any application requiring elastic connection of a pulley to a rotary member, be it a drive member or a driven member.

## Claims

1. A pulley assembly (1) for a belt drive, particularly for an internal combustion engine, comprising a hub (2) connected to a rotary member and rotating with it about a respective axis; a pulley (3) coaxial with the hub (2) and cooperating with a belt; and an elastic joint interposed between said hub (2) and said pulley (3), and comprising elastic means for connecting said pulley (3) rotationally to said hub (2), and limited-torque-transmission friction means (29, 31) for releasing said pulley (3) from said hub (2) above a first maximum transmittable torque value in a first relative rotation direction between said hub (2) and said pulley (3); said elastic means comprising a spiral spring (24) wound about said axis and generating an elastic load to transmit torque between said hub (2) and said pulley (3); and said friction means (29, 31) comprising a first friction coupling (29) between an outer end portion (24b) of said spring (24) and said pulley (3), and which defines said first maximum transmittable torque, value; **characterized in that** said spring (24) has an inner end portion (24a) connected to said hub (2) by a second friction coupling (31), wherein said second friction coupling (31) defines a second maximum transmittable torque value in a second relative rotation direction between said hub (2) and said pulley (3); said first and said second friction coupling (29, 31) permitting slip of the respective said end portions (24b, 24a) of said spring (24) with respect to said pulley (3) and to said hub (2) above the respective maximum transmittable torque values (Cmax1, -Cmax2) in the respective relative rotation directions.

2. A pulley assembly (1) as claimed in Claim 1, **characterized in that** said end portions (24a, 24b) of said spring (24) are interference-fitted to said hub (2) and said pulley (3) respectively.

3. A pulley assembly (1) as claimed in Claim 1 or 2, **characterized in that** said spring (24) increases in radius in the opposite direction to the rotation direction of said hub (2).

4. A pulley assembly (1) as claimed in any one of the foregoing Claims, **characterized in that** said first friction coupling (29) comprises a layer of friction material (28) interposed between said outer end portion (24b) of said spring (24) and a cylindrical wall (14) of said pulley (3).

5. A pulley assembly (1) as claimed in Claim 4, **characterized in that** said layer of friction material (28) is defined by a coating applied to said wall (14) of said pulley (3).

6. A pulley assembly (1) as claimed in Claim 4, **characterized in that** said layer of friction material (28) is defined by a coating applied to said outer end portion (24b) of said spring (24).

7. A pulley assembly (1) as claimed in one of the foregoing Claims, **characterized in that** said second friction coupling (31) comprises a layer of friction material (30) interposed between said inner end portion (24a) of said spring (24) and said hub (2).

8. A pulley assembly (1) as claimed in Claim 7, **characterized in that** said layer of friction material (30) is defined by a coating applied to said hub (2)

9. A pulley assembly (1) as claimed in Claim 7, **characterized in that** said layer of friction material (30) is defined by a coating applied to said inner end portion (24a) of said spring (24).

10. A pulley assembly (1) as claimed in any one of the foregoing Claims, **characterized in that** at least one of said first and second end portions (24b, 24a) of said spring (24) is other than spiral in shape.

11. A pulley assembly (1) as claimed in Claim 10, **characterized in that** at least one of said first and second end portions (24b, 24a) of said spring (24) is arc-shaped.

12. A pulley assembly (1) as claimed in any one of the foregoing Claims, **characterized in that** said maximum transmittable torque values (Cmax1, -Cmax2) in the respective relative rotation directions are equal in absolute value.

13. A pulley assembly (1) as claimed in any one of Claims 1 to 11, **characterized in that** said maximum transmittable torque values (Cmax1, -Cmax2) in the respective relative rotation directions differ from each other.

14. A pulley assembly (1) as claimed in any one of the foregoing Claims, **characterized, by** comprising an integrated torsion damper (33).

## Patentansprüche

1. Riemenscheibenanordnung (1) für einen Riemenantrieb insbesondere für einen Verbrennungsmotor, umfassend eine Nabe (2), die mit einem Drehelement verbunden ist und sich mit ihm um eine jeweilige Achse dreht; eine Riemenscheibe (3), die zur Nabe (2) koaxial ist und mit einem Riemen zusammenwirkt; und eine elastische Verbindung, die zwischen der Nabe (2) und der Riemenscheibe (3) eingefügt ist und die eine elastische Einrichtung, um die Riemenscheibe (3) in Drehrichtung mit der Nabe (2) zu verbinden, und Friktionseinrichtungen (29, 31) für eine Übertragung von begrenzten Drehmomenten, um die Riemenscheibe (3) oberhalb eines ersten maximalen übertragbaren Drehmomentwerts in einer ersten Relativdrehrichtung zwischen der Nabe (2) und der Riemenscheibe (3) von der Nabe (2) freizugeben, umfasst; wobei die elastische Einrichtung eine Spiralfeder (24) umfasst, die um die Achse gewunden ist und eine elastische Belastung erzeugt, um ein Drehmoment zwischen der Nabe (2) und der Riemenscheibe (3) zu übertragen; und wobei die Friktionseinrichtungen (29, 31) eine erste Friktionskopplung (29) zwischen einem äußeren Endteil (24b) der Feder (24) und der Riemenscheibe (3) umfassen und die den ersten maximalen übertragbaren Drehmomentwert festlegt; **dadurch gekennzeichnet, dass** die Feder (24) einen inneren Endteil (24a) aufweist, der durch eine zweite Friktionskopplung (31) mit der Nabe (2) verbunden ist, wobei die zweite Friktionskopplung (31) einen zweiten maximalen übertragbaren Drehmomentwert in einer zweiten Relativdrehrichtung zwischen der Nabe (2) und der Riemenscheibe (3) festlegt; wobei die erste und die zweite Friktionskopplung (29, 31) einen Schlupf der jeweiligen besagten Endteile (24b, 24a) der Feder (24) in Bezug zu der Riemenscheibe (3) und zu der Nabe (2) oberhalb der jeweiligen maximalen übertragbaren Drehmomentwerte (Cmax1, -Cmax2) in den jeweiligen Relativdrehrichtungen zulassen.

2. Riemenscheibenanordnung (1) nach Anspruch 1, **dadurch gekennzeichnet, dass** die Endteile (24a, 24b) der Feder (24) an der Nabe (2) bzw. der Riemenscheibe (3) durch Übermaßpassung angebracht sind.

3. Riemenscheibenanordnung (1) nach Anspruch 1 oder 2, **dadurch gekennzeichnet, dass** die Feder (24) in der zur Drehrichtung der Nabe (2) entgegengesetzten Richtung im Radius ansteigt.

4. Riemenscheibenanordnung (1) nach einem der vorangehenden Ansprüche, **dadurch gekennzeichnet, dass** die erste Friktionskopplung (29) eine Schicht von Friktionsmaterial (28) umfasst, die zwischen dem äußeren Endteil (24b) der Feder (24) und einer zylindrischen Wand (14) der Riemenscheibe (3) eingefügt ist.

5. Riemenscheibenanordnung (1) nach Anspruch 4, **dadurch gekennzeichnet, dass** die Schicht von Friktionsmaterial (28) durch eine Beschichtung festgelegt ist, die auf der Wand (14) der Riemenscheibe (3) aufgebracht ist.

6. Riemenscheibenanordnung (1) nach Anspruch 4, **dadurch gekennzeichnet, dass** die Schicht von Friktionsmaterial (28) durch eine Beschichtung festgelegt ist, die auf dem äußeren Endteil (24b) der Feder (24) aufgebracht ist.

7. Riemenscheibenanordnung (1) nach einem der vorangehenden Ansprüche, **dadurch gekennzeichnet, dass** die zweite Friktionskopplung (31) eine Schicht von Friktionsmaterial (30) umfasst, die zwischen dem inneren Endteil (24a) der Feder (24) und der Nabe (2) eingefügt ist.

8. Riemenscheibenanordnung (1) nach Anspruch 7, **dadurch gekennzeichnet, dass** die Schicht von Friktionsmaterial (30) durch eine Beschichtung festgelegt ist, die auf der Nabe (2) aufgebracht ist.

9. Riemenscheibenanordnung (1) nach Anspruch 7, **dadurch gekennzeichnet, dass** die Schicht von Friktionsmaterial (30) durch eine Beschichtung festgelegt ist, die auf dem inneren Endteil (24a) der Feder (24) aufgebracht ist.

10. Riemenscheibenanordnung (1) nach einem der vorangehenden Ansprüche, **dadurch gekennzeichnet, dass** mindestens einer von dem ersten und zweiten Endteil (24b, 24a) der Feder (24) anders als spiralförmig ist.

11. Riemenscheibenanordnung (1) nach Anspruch 10, **dadurch gekennzeichnet, dass** mindestens einer von dem ersten und zweiten Endteil (24b, 24a) der Feder (24) bogenförmig ist.

12. Riemenscheibenanordnung (1) nach einem der vorangehenden Ansprüche, **dadurch gekennzeichnet, dass** die maximalen übertragbaren Drehmomentwerte (Cmax1, -Cmax2) in den jeweiligen Relativdrehrichtungen im Absolutwert gleich sind.

13. Riemenscheibenanordnung (1) nach einem der Ansprüche 1 bis 11, **dadurch gekennzeichnet, dass** sich die maximalen übertragbaren Drehmomentwerte (Cmax1, -Cmax2) in den jeweiligen Relativdrehrichtungen voneinander unterscheiden.

14. Riemenscheibenanordnung (1) nach einem der vorangehenden Ansprüche, **gekennzeichnet durch** Umfassen eines als Einheit ausgebildeten Torsionsdämpfers (33).

## Revendications

1. Ensemble de poulie (1) pour une transmission par courroie, en particulier pour un moteur à combustion interne, comprenant un moyeu (2) relié à un élément rotatif et tournant avec celui-ci autour d'un axe respectif, une poulie (3) coaxiale avec le moyeu (2) et coopérant avec une courroie, et un joint élastique intercalé entre ledit moyeu (2) et ladite poulie (3) et comprenant un moyen élastique pour relier avec rotation ladite poulie (3) audit moyeu (2) et un moyen de friction pour transmission de couple limité ou limitée (29, 31) destiné à libérer ladite poulie (3) dudit moyeu (2) au-dessus d'une première valeur de couple pouvant être transmis maximum dans un premier sens de rotation relative entre ledit moyeu (2) et ladite poulie (3), ledit moyen élastique comprenant un ressort en spirale (24) enroulé autour dudit axe et générant une charge élastique pour transmettre un couple entre ledit moyeu (2) et ladite poulie (3), et ledit moyen de friction (29, 31) comprenant un premier accouplement à friction (29) entre une partie d'extrémité extérieure (24b) dudit ressort (24) et ladite poulie (3) et qui définit ladite première valeur de couple transmissible maximum, **caractérisé en ce que** ledit ressort (24) comporte une partie d'extrémité intérieure (24a) reliée audit moyeu (2) par un deuxième accouplement à friction (31), ledit deuxième accouplement à friction (31) définissant une deuxième valeur de couple transmissible maximum dans un deuxième sens de rotation relative entre ledit moyeu (2) et ladite poulie (3), lesdits premier et deuxième accouplements à friction (29, 31) permettant un patinage desdites parties d'extrémité respectives (24b, 24a) dudit ressort (24) par rapport à ladite poulie (3) et audit moyeu (2) au-dessus des valeurs respectives de couple transmissible maximums (Cmax1, -Cmax2) dans les sens de rotation relative respectifs.

2. Ensemble de poulie (1) selon la revendication 1, **caractérisé en ce que** lesdites parties d'extrémité (24a, 24b) dudit ressort (24) sont ajustées serrées audit moyeu (2) et à ladite poulie respectivement.

3. Ensemble de poulie (1) selon la revendication 1 ou 2, **caractérisé en ce que** ledit ressort (24) augmente en rayon dans le sens opposé au sens de rotation dudit moyeu (2).

4. Ensemble de poulie (1) selon l'une quelconque des revendications précédentes, **caractérisé en ce que** ledit premier accouplement à friction (29) comprend une couche de matériau de friction (28) intercalée entre ladite partie d'extrémité extérieure (24b) dudit ressort (24) et une paroi cylindrique (14) de ladite poulie (3).

5. Ensemble de poulie (1) selon la revendication 4, **caractérisé en ce que** ladite couche de matériau de friction (28) est définie par un revêtement appliqué à ladite paroi (14) de ladite poulie (3).

6. Ensemble de poulie (1) selon la revendication 4, **caractérisé en ce que** ladite couche de matériau de friction (28) est définie par un revêtement appliqué à ladite partie d'extrémité extérieure (24b) dudit ressort (24).

7. Ensemble de poulie (1) selon l'une des revendications précédentes, **caractérisé en ce que** ledit deuxième accouplement à friction (31) comprend une couche de matériau de friction (30) intercalée entre ladite partie d'extrémité intérieure (24a) dudit ressort (24) et ledit moyeu (2).

8. Ensemble de poulie (1) selon la revendication 7, **caractérisé en ce que** ladite couche de matériau de friction (30) est définie par un revêtement appliqué audit moyeu (2).

9. Ensemble de poulie (1) selon la revendication 7, **caractérisé en ce que** ladite couche de matériau de friction (30) est définie par un revêtement appliqué à ladite partie d'extrémité intérieure (24a) dudit ressort (24).

10. Ensemble de poulie (1) selon l'une quelconque des revendications précédentes, **caractérisé en ce qu'**au moins une desdites première et deuxième parties d'extrémité (24b, 24a) dudit ressort (24) est autre que de forme en spirale.

11. Ensemble de poulie (1) selon la revendication 10, **caractérisé en ce qu'**au moins une desdites première et deuxième parties d'extrémité (24b, 24a) dudit ressort (24) présente une forme d'arc.

12. Ensemble de poulie (1) selon l'une quelconque des revendications précédentes, **caractérisé en ce que** lesdites valeurs de couple transmissible maximums (Cmax1, -Cmax2) dans les sens de rotation relative respectifs sont égales en valeur absolue.

13. Ensemble de poulie (1) selon l'une quelconque des revendications 1 à 11, **caractérisé en ce que** lesdites valeurs de couple transmissible maximums (Cmax1, -Cmax2) dans les sens de rotation relative respectifs diffèrent l'une de l'autre.

14. Ensemble de poulie (1) selon l'une quelconque des revendications précédentes, **caractérisé en ce qu'**il comprend un dispositif d'amortissement de torsion intégré (33).
